# EUROPÄISCHE PATENTANMELDUNG

(11) **EP 1 496 477 A2**
(43) Veröffentlichungstag der Anmeldung: **12.01.2005**
(21) Anmeldenummer: 04102275.7
(22) Anmeldetag: 25.05.2004
(51) Int. Cl.: G07C 9/00

(54) **Verfahren zur Sperrung und Freigabe von Audio-, Video- und/oder Informationsdaten sowie elektronisches Gerät hierzu**

(30) Priorität: 10.07.2003 DE 10331156
(71) Anmelder: ROBERT BOSCH GMBH, 70442 Stuttgart (DE)
(72) Erfinder: Siepen, Peter, 31137, Hildesheim (DE); Kussmann, Holger, 31180, Giesen (DE); Wollborn, Michael, 30455, Hannover (DE); Placke, Lars, 30163, Hannover (DE)

(57) **Zusammenfassung**

Ein elektronisches Gerät (1) zur Wiedergabe, Ausführung und/oder Bearbeitung von Audio-, Video- und/oder Informationsdaten oder Funktionen (Daten) bei mobiler Nutzung mit einer Nutzungsrecht-Verwaltungseinrichtung (5) zur Sperrung oder Freigabe der Daten für die Wiedergabe, Ausführung und/oder Bearbeitung in Abhängigkeit von den Nutzungsrechten (6) ist so ausgebildet, dass die Nutzungsrechte (6) durch die Nutzungsrecht-Verwaltungseinrichtung (5) in Verbindung mit Ortsposition des mobil nutzbaren elektronischen Gerätes (1) vergeben werden, und eine Sperrung oder Freigabe der Daten in Abhängigkeit von einer aktuellen Ortsposition (POS) des elektronischen Gerätes (1) erfolgt.

## Beschreibung

Die Erfindung betrifft ein elektronisches Gerät zur Wiedergabe und/oder Bearbeitung von Audio-, Video- und/oder Informationsdaten (Daten) bei mobiler Nutzung mit einer Nutzungsrecht-Verwaltungseinrichtung zur Sperrung oder Freigabe der Daten für die Wiedergabe und/oder Bearbeitung in Abhängigkeit von den Nutzungsrechten.

Die Erfindung betrifft weiterhin ein Verfahren zur Sperrung und Freigabe von Audio-, Video- und/oder Informationsdaten, die mit einem solchem mobil einsetzbaren elektronischen Gerät in Abhängigkeit von Nutzungsrechten wiedergegeben und/oder bearbeitet werden sollen.

Es sind hinreichend mobile Multimediasysteme z. B. für den Einbau in Kraftfahrzeugen bekannt, bei denen die Verwendung bestimmter Multimedia- oder Informationsdaten bzw. die Ausführung bestimmter Funktionen oder Softwareprogramme eingeschränkt und somit nicht allen Nutzern möglich ist. Der Zugriff auf diese Audio-, Video- und/oder Informationsdaten ist nur solchen Nutzern erlaubt, die im Besitz eines entsprechenden einfachen oder mehrfachen, gegebenenfalls zeitlich eingeschränkten Nutzungsrechtes sind. Die Definition der Nutzungsrechte wird dabei insbesondere in digitaler Form mittels Speichermedien, wie Speicherkarten, Chipkarten etc. oder mit Hilfe drahtloser Übertragungswege (GSM-Mobilfunknetz, UMTS-Mobilfunknetz etc.) in das mobile elektronische Gerät übertragen. Sofern ein Nutzungsrecht an eine bestimmte Person gebunden ist, wird zusätzlich noch eine Authentifizierung des Nutzers beispielsweise durch Eingabe eines Passworts oder einer persönlichen Identifikationsnummer (PIN) vorgenommen.

In der DE 42 27 969 C2 ist weiterhin ein Verfahren beschrieben, bei dem eine aktuelle Ortsposition eines Kraftfahrzeugs zur Kontrolle der Nutzung dieses Kraftfahrzeugs im Innenstadtbereich verwendet wird. Auf diese Weise kann neben der Einschränkung der Kraftfahrzeugnutzung auf autorisierte Nutzer auch der Nutzungsbereich eingeschränkt werden, beispielsweise in Abhängigkeit von einer Nutzungsvereinbarung des Nutzers mit dem Eigentümer des Kraftfahrzeuges.

Auch die Ermittlung der aktuellen Ortsposition von Kraftfahrzeugen ist hinreichend bekannt. Bei derartigen Ortungssystemen wird beispielsweise das so genannte Global-Positioning-System (GPS) genutzt. Diese Ortungssysteme werden insbesondere im Zusammenhang mit Kraftfahrzeug-Navigationssystemen eingesetzt, welche unter Verwendung geeigneter Kartendaten, die auf einem Datenspeicher im Gerät oder in einem zentralen Server gespeichert sind, den Nutzer eines Kraftfahrzeugs durch Fahrhinweise von seinem aktuellen Ausgangsort zu seinem gewünschten Ziel führen. Mit Hilfe der Ortungssysteme lässt sich in einem mobilen elektronischen Gerät feststellen, in welcher absoluten geographischen Position auf der Erdoberfläche sich das elektronische Gerät zu einem bestimmten Zeitpunkt befindet.

Aufgabe der Erfindung ist es, ein verbessertes Verfahren zur Sperrung und Freigabe von Audio-, Video- und/oder Informationsdaten sowie ein verbessertes elektronisches Gerät hierzu zu schaffen.

Die Aufgabe wird bei dem gattungsgemäßen elektronischen Gerät erfindungsgemäß dadurch gelöst, dass die Nutzungsrechte durch die Nutzungsrecht-Verwaltungseinrichtung in Verbindung mit Ortspositionen des mobilen nutzbaren elektronischen Gerätes vergeben werden und eine Sperrung oder Freigabe der Daten in Abhängigkeit von einer aktuellen Ortsposition des elektronischen Gerätes erfolgt.

Über die bekannten Nutzungsrecht-Verwaltungseinrichtungen hinaus bietet die erfindungsgemäße Nutzungsrecht-Verwaltungseinrichtung somit die zusätzliche Möglichkeit, die Nutzung von Multimedia- und/oder Informationsdaten, zu denen auch Funktionen und Programme des elektronischen Gerätes zählen, in Abhängigkeit von der absoluten geographischen Ortsposition des mobilen elektronischen Gerätes zu kontrollieren. Damit kann der Zugriff auf die Daten mit den gegebenenfalls damit zusammenhängenden Anwendungen für bestimmte Ortsbereiche eingeschränkt oder verhindert werden.

Die neue ortsabhängige Beschränkung der Nutzung von Daten oder Funktionen in Verbindung mit elektronischen Geräten bietet über die herkömmliche nutzerbezogene Nutzungsrecht-Verwaltung hinaus eine Vielzahl innovativer Anwendungsmöglichkeiten.

Die Nutzungsrecht-Verwaltungseinrichtung kann weiterhin zur Vergabe von Nutzungsrechten in Abhängigkeit von dem jeweiligen Nutzer ausgebildet sein und Mittel zur Authentifizierung des Nutzers haben. Die konkrete Konstruktion der Nutzungsrecht-Verwaltungseinrichtung beispielsweise durch Programmierung liegt aber im Rahmen des fachmännischen Könnens.

Es ist vorteilhaft, wenn die Nutzungsrecht-Verwaltungseinrichtung zum Einlesen von Nutzungsrechten von durch das elektronische Gerät auslesbaren Speichermedien oder drahtlos übermittelten Nutzungsrechten ausgebildet ist. Auf diese Weise kann eine Verwaltung und Zuordnung von Nutzungsrechten zentralisiert erfolgen, und der Nutzer wird bei der Aufgabe der Nutzungsrecht-Verwaltung entlastet, so dass die Akzeptanz einer derartigen Funktionalität des elektronischen Gerätes erhöht wird.

Die Aufgabe wird weiterhin durch das gattungsgemäße Verfahren zur Sperrung und Freigabe von Audio-, Video- und/oder Informationsdaten oder Funktionen (Daten) durch Vergeben von Nutzungsrechten in Verbindung mit Ortspositionen zum Sperren oder Freigeben von Daten in Abhängigkeit von einer aktuellen Ortsposition des elektronischen Gerätes gelöst.

Die Erfindung wird nachfolgend anhand der beigefügten Zeichnung beispielhaft näher erläutert. Es zeigt:

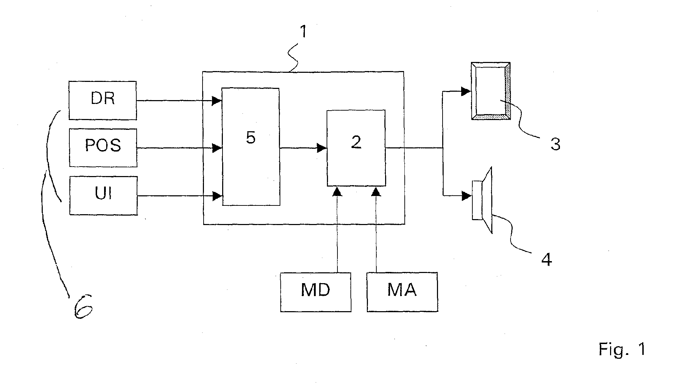

- Figur 1 -: ein Blockdiagramm eines erfindungsgemäßen elektronischen Gerätes mit einer Nutzungsrecht-Verwaltungseinrichtung.

Die Figur 1 lässt ein Blockdiagramm eines elektronischen Gerätes 1 erkennen, das mobil nutzbar ist, indem es beispielsweise in ein Kraftfahrzeug eingebaut ist. Das elektronische Gerät hat eine Wiedergabeeinheit 2 zur Wiedergabe, Ausführung und/oder Bearbeitung von Audio-, Video- und/oder Informationsdaten bzw. zur Ausführung von Funktionen. Die Audio-, Videound/oder Informationsdaten sowie Funktionen werden nachfolgend als Daten bezeichnet. Die Wiedergabe der Daten kann beispielsweise auf einem Display 3 oder einem Lautsprechersystem 4 erfolgen.

Die Daten werden dem elektronischen Gerät 1 beispielsweise als Multimedia-Daten MD oder Multimedia-Anwendungen MA drahtlos oder über ein Speichermedium (CD-ROM, DVD etc.) zur Verfügung gestellt.

Das elektronische Gerät 1 hat weiterhin eine Nutzungsrecht-Verwaltungseinrichtung 5, um die Wiedergabe, Ausführung und/oder Bearbeitung der Daten freizugeben oder zu sperren. Dies erfolgt in Abhängigkeit von Nutzungsrechten, die in dem elektronischen Gerät 1 gespeichert sind, durch das elektronische Gerät 1 von auslesbaren Speichermedien (Speicherkarte, Chipkarte etc.) oder mit Hilfe drahtloser Übertragungswege (GSM-Funknetz, UMTS-Funknetz etc.) in das mobile elektronische Gerät 1 eingelesen werden.

Die Nutzungsrechte 6 beinhalten Ortspositions-Daten POS, mit denen bestimmte örtliche Nutzungsbereiche oder Ausschlussbereiche für eine Nutzung der Daten spezifiziert werden.

Die Positionsinformationen POS beschreiben die absolute Position des elektronischen Gerätes 1 auf der Erdoberfläche, an welcher sich das elektronische Gerät 1 zu einem bestimmten Zeitpunkt befindet. Diese Positionsinformation POS kann zum Beispiel von einem neben dem elektronischen Gerät 1 im Kraftfahrzeug oder in dem elektronischen Gerät 1 integrierten Navigationssystem stammen.

Weiterhin werden dem elektronischen Gerät 1 Nutzerinformationen Ul zugeführt, die den oder die Nutzer festlegen, die auf die Daten bzw. Anwendungen zugreifen wollen. Die Nutzerinformationen Ul können durch Authentifizierung beispielsweise mittels Eingabe eines Passworts oder einer persönlichen Identifikations-Nummer PIN generiert werden.

Die Positionsinformationen POS und Nutzerinformationen Ul werden mit den Nutzungsrechten 6 verglichen, die für einen Teil oder für die gesamten Daten bzw. Anwendungen die Bedingungen festlegen, zu denen definierte Nutzer die Daten zu definierten Zeiten und Häufigkeiten und definierten Ortspositionen nutzen können. Diese Nutzungsrechte 6 (digitale Rechte) werden entweder in dem elektronischen Gerät 1 direkt abgespeichert oder können vom Nutzer mittels eines Datenträgers, wie Speicherkarte, CD etc. mitgeführt oder mittels eines drahtlosen Übertragungssystems (GSM, UMTS, Blue Tooth etc.) in das elektronische Gerät 1 übertragen werden.

Die Nutzungsrecht-Verwaltungseinheit 5 nimmt nun einen Abgleich der Positionsinformation POS und Nutzerinformation Ul mit den Nutzungsrechten 6 vor und gibt die Nutzung der Daten, d. h. die Nutzung etwaiger Funktionen frei, sofern dies bei den angegebenen Positionsinformationen POS und Nutzerinformationen Ul in den Nutzungsrechten 6 vorgesehen ist. Ansonsten wird die Nutzung der Daten gesperrt.

Auf diese Weise können zum Beispiel im öffentlichen Verkehrsraum in Städten kostenlose Navigationsdaten oder Navigationsdienste denjenigen Autofahrern angeboten werden, die sich auf bestimmten Hauptverkehrsstraßen befinden. Diese kostenlos zur Verfügung gestellten Navigationsdaten ermöglichen es dem Benutzer, in Kombination mit einem entsprechenden Multimedia- und Informationssystem im Kraftfahrzeug sich in dem Ballungsgebiet zu einem gewünschten Ziel bzw. durch das Ballungsgebiet zu einem Ziel außerhalb führen zu lassen. Dabei wird mit Hilfe der Positionsinformation POS sichergestellt, dass ein Zugriff auf die Daten bzw. den Dienst nur möglich ist, wenn der Nutzer sich mit seinem Kraftfahrzeug auf bestimmten Straßen bewegt. Verlässt er diese, um zum Beispiel eine Abkürzung durch ein Wohngebiet zu nehmen, wir der Zugriff auf den Dienst bzw. die Daten verweigert und eine weitere Zielführung findet nicht bzw. erst wieder statt, wenn der Nutzer sich wieder auf einer "erlaubten" Straße befindet. Hierdurch lassen sich Verkehrsflüsse in bestimmtem Maße so lenken, wie es unter verschiedenen Aspekten, wie z. B. einer Verkehrsberuhigung etc. gewünscht ist.

Dadurch lässt sich eine Steuerung und Lenkung des Durchgangsverkehrs in Großstädten erreichen. Zusätzlich könnten zum Beispiel Werbefilme, Videofilme oder Musikdateien als Multimedia-Daten MD angeboten werden, die aber nur innerhalb definierter Regionen abspielbar sind. Weiterhin könnten bestimmte Dienste, wie ein kostenloser Zugriff auf Restaurantspeisekarten, Theaterspielpläne etc. über drahtlose Kommunikationsverbindungen (insbesondere Mobilfunktelefonnetze) angeboten werden, die aber ebenfalls nur innerhalb der definierten Region abrufbar sind.

Weiterhin kann die Atraktivität bestimmter Reiseziele erhöht werden, indem in Reiseführern bestimmte Daten oder Anwendungen vorgesehen werden, auf die nur in der näheren oder weiteren Umgebung des Reiseziel zugegriffen werden kann.

Schließlich kann die Kundenbindung zum Beispiel an Tankstellen, Schnellrestaurants etc. dadurch erhöht werden, dass kostenlos zur Verfügung gestellte Multimedia-Daten MD, wie Musik-CDs, MP3-kodierte Audiodaten etc. nur dann in dem mobilen elektronischen Gerät 1 abgespielt werden können, wenn der Nutzer in einer bestimmten Häufigkeit die Bereiche der Tankstellen oder Schnellrestaurants anfährt. Um die Freigabe der Daten bei einfachem Durchfahren des definierten Ortsbereiches zu vermeiden, kann zusätzlich überprüft werden, ob eine bestimmte Aufenthaltsdauer erreicht oder überschritten wurde, zum Beispiel die übliche durchschnittliche Zeit eines Tankvorgangs oder eines Kurzeinkaufs.

Das Verfahren kann für vielfältige Arten von Daten eingesetzt werden, wie beispielsweise Navigationsdaten, Audiodaten, Videodaten, Informationsdaten, Radioprogramme etc. Es kann auch für verschieden-artige Funktionen, wie Spiele, Informationsdienste, Navigations- und Lotsendienste, Internetzugriff etc. eingesetzt werden.

Das Verfahren kann auch zur Festlegung von Ausschlussbereichen genutzt werden, um Ortspositionen zu definieren, an denen die Nutzung der Daten nicht gestattet ist, wohingegen die Nutzung ansonsten allgemein freigegeben ist.

## Patentansprüche

1. Elektronisches Gerät (1) zur Wiedergabe und/oder Bearbeitung von Audio-, Video- und/oder Informationdsdaten (Daten) bei mobiler Nutzung mit einer Nutzungsrecht-Verwaltungseinrichtung (5) zur Sperrung oder Freigabe der Daten für die Wiedergabe und/oder Bearbeitung in Abhängigkeit von den Nutzungsrechten (6), **dadurch gekennzeichnet, dass** die Nutzungsrechte (6) durch die Nutzungsrecht-Verwaltungseinrichtung (5) in Abhängigkeit der aktuellen Ortsposition des mobil nutzbaren elektronischen Gerätes (1) vergeben werden, und eine Sperrung oder Freigabe der Daten in Abhängigkeit von einer aktuellen Ortsposition des elektronischen Gerätes (1) erfolgt.

2. Elektronisches Gerät (1) nach Anspruch 1, **gekennzeichnet durch** eine integrierte Positionsermittlungseinrichtung zur Bestimmung der aktuellen Ortsposition des elektronischen Gerätes (1) oder eine Schnittstelle zu einer externen Positionsermittlungseinrichtung.

3. Elektronisches Gerät (1) nach Anspruch 1 oder 2, **dadurch gekennzeichnet, dass** die Nutzungsrecht-Verwaltungseinrichtung (5) weiterhin zur Vergabe von Nutzungsrechten (6) in Abhängigkeit von dem jeweiligen Nutzer ausgebildet ist und Mittel zur Authentifizierung des Nutzers aufweist.

4. Elektronisches Gerät (1) nach einem der vorhergehenden Ansprüche, **dadurch gekennzeichnet, dass** die Nutzungsrecht-Verwaltungseinrichtung (5) zum Einlesen von Nutzungsrechten (6) von durch das elektronische Gerät (1) auslesbaren Speichermedien oder drahtlos übermittelten Nutzungsrechten (6) ausgebildet ist.

5. Verfahren zur Sperrung und Freigabe von Audio-, Video- und/oder Informationsdaten (Daten), die mit einem mobil einsetzbaren elektronischen Gerät (1) nach einem der vorhergehenden Ansprüche in Abhängigkeit von Nutzungsrechten (6) wiedergegeben und/oder bearbeitet werden sollen, **gekennzeichnet durch** Vergeben von Nutzungsrechten (6) in Verbindung mit Ortspositionen zum Sperren oder Freigeben von Daten in Abhängigkeit von einer aktuellen Ortsposition des elektronischen Gerätes (1).

6. Verfahren nach Anspruch 5, **gekennzeichnet durch** Vergeben von Nutzungsrechten (6) in Verbindung mit authorisierten Nutzern zum Sperren oder Freigeben von Daten nach erfolgreicher Authentifizierung eines Nutzers.

7. Verfahren nach Anspruch 6, **dadurch gekennzeichnet, dass** die Authentifizierung mittels Passworteingabe oder Identifikationsnummerneingabe (PIN) erfolgt.

8. Verfahren nach einem der Ansprüche 5 bis 7, **gekennzeichnet durch** Einlesen von Nutzungsrecht-Daten **durch** die Nutzungsrecht-Verwaltungseinheit (5) über auslesbare Speichermedien oder **durch** drahtlose Übermittlung an das elektronische Gerät (1).
